# EUROPÄISCHE PATENTSCHRIFT

(11) **EP 1 817 209 B1**
(45) Veröffentlichungstag und Bekanntmachung des Hinweises auf die Patenterteilung: **26.03.2008**
(21) Anmeldenummer: 05787072.7
(22) Anmeldetag: 09.09.2005
(51) Int. Cl.: B60R 21/01, G01P 21/00

(54) **EINEN BESCHLEUNIGUNGSSENSOR UMFASSENDES STEUERGERÄT**
CONTROLLER COMPRISING AN ACCELERATION SENSOR
APPAREIL DE COMMANDE COMPRENANT UN CAPTEUR D'ACCELERATION

(30) Priorität: 23.11.2004 DE 102004056416
(43) Veröffentlichungstag der Anmeldung: 15.08.2007
(73) Patentinhaber: ROBERT BOSCH GMBH, 70442 Stuttgart (DE)
(72) Erfinder: HEILMANN, Gernod, 71282 Hemmingen (DE); PLESSE, Cord, 71636 Ludwigsburg (DE)
(86) Internationale Anmeldenummer: PCT/EP2005/054494
(87) Internationale Veröffentlichungsnummer: WO 2006/056497

(56) Entgegenhaltungen:
- WO-A-02/42123
- DE-A1- 10 057 917
- DE-C2- 4 244 901

## Beschreibung

### Stand der Technik

Die Erfindung geht aus von in einem Steuergerät zur Ansteuerung von Personenschutzmitteln nach der Gattung des unabhängigen Patentanspruchs.

Aus WO 02/42123 A1 ist ein Steuergerät bekannt, das zur Ansteuerung von Rückhaltemitteln verwendet wird. Sensorwerte von internen und externen Sensoren werden durch einen Sicherheitsschalter auf ihre Gültigkeit überprüft, um dann in Abhängigkeit von dieser Gültigkeitsprüfung über Zeitstufen die Endstufen freizugeben.

Aus DE 100 57 917 A1 ist es bekannt, einen Sicherheitsschalter vorzusehen, der auf Sensorwerte aus allen Richtungen reagiert, in dem eine Überprüfung auf einen Auslösefall der Sensorwerte durchgeführt wird.

Aus DE 42 44 901 C2 ist eine Aufprallerfassungseinrichtung für Gaskissensysteme bekannt. Dabei wird gelehrt, dass ein Beschleunigungssensor über eine sehr hohe Steuerschaltung ein Prüfsignal erhält, dass eine elektrostatische Kraft erzeugt, die eine bewegliche Elektrode in dem Maß ablenken kann, in dem die bewegliche Elektrode durch eine Beschleunigung aufgrund eines Aufpralls des Kraftfahrzeugs abgelenkt würde. Weiterhin ist ein Prüfabschnitt vorgesehen, der die Ausgabe eines Prüfsignals und eines Steuersignals an die Aufblaseinrichtung und der Prüfung der einwandfreien Funktion des System dient.

### Vorteile der Erfindung

Das erfindungsgemäße Steurgerät zur Ansteuerung von Personenschutzmitteln mit den Merkmalen des unabhängigen Patentanspruchs hat demgegenüber den Vorteil, dass die Gültigkeitsüberprüfung der Sensorwerte in einen Beschleunigungssensor im Steuergerät integriert ist. Diese Anwendung ist daher insbesondere vorteilhaft, wenn keine externen Sensoren verwendet werden. Damit ist die Erfindung für einfache Rückhaltesysteme mit wenigen Zündkreisen geeignet, die insbesondere durch einen zentral angeordneten Beschleunigungssensor angesteuert werden. Der Beschleunigungssensor verfügt über einen Logikteil zur Übermittlung der Sensorwerte an den Prozessor, welcher im Steuergerät den Auslösealgorithmus berechnet. Dieser Logikteil ist zusätzlich direkt mit den Endstufen verbunden. Dies ist notwendig, damit in Abhängigkeit von diesem Gültigkeitstest die Endstufen freigegeben oder gesperrt werden können. Trotz der einfacheren Ausführung weist ein erfindungsgemäßes Steuergerät mit dem Beschleunigungssensor eine hohe Sicherheit auf.

Durch die in den abhängigen Ansprüchen aufgeführten Maßnahmen und Weiterbildungen sind vorteilhafte Verbesserungen des im unabhängigen Patentanspruch angegebenen Steuergeräts möglich.

Besonders vorteilhaft ist, dass der Logikteil das Beschleunigungssignal mit einem festen Schwellwert auf seine Gültigkeit überprüft. Da es sich hier um eine oder zwei Beschleunigungen, wenn in verschiedenen Richtungen gemessen wird, handelt, können hierfür zwei feste Schwellwerte oder auch nur ein fester Schwellwert verwendet werden, wenn allein in Fahrtrichtung sensiert wird.

Weiterhin ist es vorteilhaft, dass der Logikteil mit den Endstufen derart verbunden ist, dass eine Leitung zur Plusendstufe führt und eine weitere, davon unabhängige Leitung, zur Minusendstufe. Damit ist es möglich, die Endstufen unterschiedlich freizugeben und auch getrennt voneinander zu testen.

Weiterhin ist es von Vorteil, dass der Logikteil die Endstufen in Abhängigkeit von der Überprüfung für eine vorgegebene Zeit freigibt. Das heißt, der Logikteil weist Zeitglieder, wie ein,Monoflop, auf, um die Freigabe bzw. Sperrung für vorgegebene Zeiten durchzuführen. Damit wird verhindert, dass die Endstufen im Falle der Freigaben nicht für eine lange Zeit freigegeben werden, sondern nur für eine kurze Zeit, die ausreichend sein muss, um bei einem Auslösefall bereit zu sein.

Weiterhin ist es von Vorteil, dass der Beschleunigungssensor auch in Abhängigkeit von einem Selbsttest die Endstufen oder wenigstens eine Endstufe davon freigibt. Bemerkt der Sensor, dass bei seinem Selbsttest ein Fehler auftritt, muss dies zu einer sofortigen Sperrung wenigstens einer Endstufe führen. Dies verleiht dem Gesamtsystem ein hohes Maß an Sicherheit.

Um die Überwachung des Steuergeräts noch weiter zu vereinfachen, wird in den Logikteil auch eine Funktion oder mehrere Funktionen zum Testen des Prozessors integriert. Dies bedeutet, dass der Beschleunigungssensor selbst den Prozessor, der die Sensordaten auswertet, testet. Dazu wird hier ein Watchdog verwendet, und zwar insbesondere zwei Watchdogs, um zum einen die Echtzeitebene des Betriebssystems des Prozessors und zum anderen die Hintergrundebene zu testen. Dabei wird für die Echtzeitebene ein Watchdogtimer mit einer kurzen Ansprechzeit verwendet und für die Hintergrundebene einer mit einer erheblich längeren Ansprechzeit. Ein Watchdog wird hier so verstanden, dass der Watchdog vom Prozessor kontinuierlich zu bedienen ist, um die Funktionsfähigkeit des Prozessors in Bezug auf den Programmfluss nachzuweisen. Das heißt, in vorgegebenen Zeitabständen hat der Prozessor dem Watchdog ein Signal zu übermitteln, sollte dieses ausbleiben, zeigt der Watchdog einen Fehler des Prozessors an. Auch in Abhängigkeit von diesem Test wird eine Sperrung bzw. Freigabe der Endstufen über die beiden Leitungen, die vom Beschleunigungssensor zu der Plus- und Minusendstufe führen, durchgeführt.

Schließlich ist es auch von Vorteil, dass der Logikteil in einem Gehäuse des Beschleunigungssensors angeordnet ist, so dass eine bauliche Einheit vorliegt. Damit ist der Beschleunigungssensor mit dem Logikteil leicht handhabbar und auch leicht in ein Steuergerät einbaubar.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild eines Steuergeräts und
- Figur 2: ein Blockschaltbild des Beschleunigungssensors.

### Beschreibung

Es ist bereits vorgeschlagen worden, einen getrennten Hardwarepfad vorzusehen, der Endstufen bei Steuergeräten von Rückhaltesystemen nur freigibt, wenn gültige Sensorsignale vorliegen und die Funktion des Prozessors durch Watchdogs nachgewiesen ist. Für Minimalsysteme, die beispielsweise nur Frontairbags und Gurtstraffer aufweisen, wird vorgeschlagen, diese Funktionen in den Beschleunigungssensor selbst, und dabei in den Logikteil des Beschleunigungssensors zu integrieren. Damit wird ein kostengünstiges Rückhaltesystem realisiert, das gleichzeitig sehr sicher ist. Die Gültigkeit der Sensordaten wird durch einen einfachen Schwellwertvergleich, beispielsweise mittels eines Komparators, erreicht. Die Watchdogfunktionalität wird durch Watchdogtimer erreicht, die durch den Prozessor regelmäßig bedient werden müssen.

Bei der hier vorgestellten Erfindung weist ein zentraler Sensor im Steuergerät einen Logikteil auf, der das Verhalten von Leitungen zur Freigabe der Endstufen setzt. Damit kann man auf den Einsatz einer getrennten Auswertung der Sensorsignale auf einem besonderen Baustein verzichten und damit erheblich Aufwand einsparen.

Üblicherweise wird ein mikromechanisches Sensorelement, beispielsweise eine Fingerstruktur, durch eine Beschleunigung ausgelenkt. Diese Auslenkung wird mit einem kapazitiven Verfahren gemessen und anschließend in einem Analog-Digital-Wandler digitalisiert. Der Sensor enthält außerdem einen Logikteil, der die Befehle von einem Prozessor, vorzugsweise einem Mikrokontroller, interpretiert und die internen Abläufe im Beschleunigungssensor steuert. Beispielsweise werden mit dem Abschicken des Read-Data-Befehls durch den Beschleunigungssensor die Beschleunigungsdaten zur Verfügung gestellt. Die Datenpakete sind üblicherweise 16 Bit breit und enthalten die folgenden Informationen:
- 10 Bit Sensordaten
- 3 Bit Kennung für den Sensortyp
- 1 Bit Kennung für einen laufenden Sensortest
- 1 Bit Kennung für eine erfolgreiche Programmierung des Sensors
- 1 Bit Kennung für eine fehlerhafte SPI (Serial Peripherial Interface)-Übertragung.

Der Logikteil wird nunmehr um einen Schwellwertvergleicher und zwei Watchdogtimer erweitert, um die Funktionen zur Überprüfung der Gültigkeit der Sensorsignale und der Funktionalität des Prozessors in den Beschleunigungssensor zu integrieren.

Mit jedem Lesen von Sensordaten wird das Ergebnis mit einem Schwellwert verglichen. Es ist hier nur ein fester Schwellwert möglich, da ja auch nur ein fester Sensor betrachtet wird. Kann dieser Sensor in verschiedenen Richtungen sensieren oder handelt es sich um mehrere Sensorelemente, dann sind entsprechend mehr Schwellwerte notwendig. Überschreiten die Sensordaten eine symmetrische Schwelle, so wird die Leitung zur High-Side, also zur Plusendstufe von einem retriggerbaren Monoflop für eine gewisse Zeit auf "enable" gesetzt. Die Werte für den Schwellwert, als auch die Enablezeit sind durch Versuche vorgegeben.

Die Leitung zur Minusendstufe wird direkt mit einem Sensortestbit verbunden. Wenn ein Sensortest ausgeführt wird, sendet der Sensor Testdaten, die die Enableschwelle überschreiten. Gleichzeitig wird ein Testbit (TEST) gesetzt und damit auch die Leitung zur Minusendstufe. Die Minusendstufe wird im Folgenden mit DIS_ALP, während die Leitung zur Plusendstufe mit DIS_AHP bezeichnet wird.

Zwei Watchdogtimer verwenden die sensorinterne Frequenz als Zeitbasis. Statt eines separaten Kommandos zur Bindung der Timer kann dies auch automatisch geschehen. In der Echtzeitebene wird beispielsweise das Read-Data-Kommando dazu verwendet, den schnellen Timer zu bedienen und in der langsamen Hintergrundebene wird das Read-ASIC-ID-Kommando verwendet.

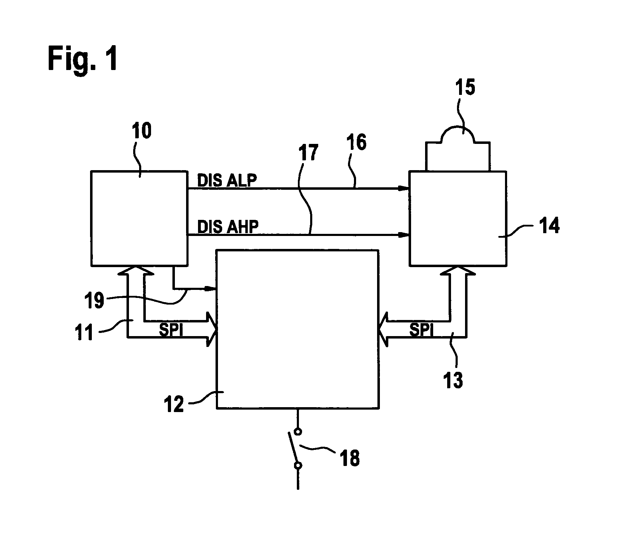

In Figur 1 ist in einem Blockschaltbild der Aufbau eines Steuergeräts zur Ansteuerung von Rückhaltemitteln mit dem erfindungsgemäßen Sensor dargestellt. Der Beschleunigungssensor 10 ist über eine bidirektionale Leitung 11, das ist hier die Serial Peripherial Interface mit einem Mikrokontroller 12 verbunden. Das Serial Peripherial Interface 11 weist mehrere Leitungen auf, wobei eine Leitung für den Datentransport vom Sensor 10 zum Mikrokontroller 12 und eine weitere Leitung für den Datentransport vom Mikrokontroller 12 zum Sensor 10 vorgesehen sind. Weitere Leitungen des SPI-Interfaces beziehen die Chip-Select-Leitung, also die Auswahl bzw. Aktivierung von Bausteinen und den Takt. Der Beschleunigungssensor 10 kann hier mehrere Sensierungselemente in verschiedenen Raumrichtungen aufweisen. Über die SPI-Leitung 11 überträgt der Sensor 10 die gemessenen Sensordaten zum Mikrokontroller 12, der in Abhängigkeit von diesen Sensordaten einen Algorithmus berechnet, wobei in Abhängigkeit von dem Ergebnis dieses Algorithmus Rückhaltemittel angesteuert werden. Dazu ist der Mikrokontroller 12 über eine weitere SPI-Leitung 13 mit einer Zündkreisansteuerung 14, die hier als FLIC bezeichnet ist, verbunden. Über die SPI-Leitung 13 wird also beispielsweise der Feuerbefehl übertragen. Über den Schalter 18 wird der Mikrokontroller 12 und damit das Steuergerät eingeschaltet. Es handelt sich hier also um die symbolische Darstellung des Zündschlüssels. Der Sensor 10 ist über eine Ausgabeleitung 16, die als DIS_ALP bezeichnet wird, mit dem FLIC 14 verbunden. Über eine zweite Leitung ist der Sensor 10 erneut mit dem FLIC 14 verbunden. Die Leitung 16 dient zur Freigabe der Minusendstufe, während die Leitung 17 zur Freigabe der Plusendstufe dient. Symbolisch ist hier ein Zündelement 15 am FLIC 14 dargestellt, das im Auslösefall mit einem hohen Zündstrom beaufschlagt wird, um eine pyrotechnische Reaktion hervorzurufen, die den Airbag oder den Gurtstraffer auslöst.

Der Sensor 10 führt die oben beschriebenen Watchdogfunktionen über die SPI-Leitung 11 durch, d.h. der Mikrokontroller 12 muss die Watchdogtimer des Sensors 10 über die Leitung 11 bedienen. Sollte dies nicht erfolgen, versetzt beispielsweise der Sensor 10 über seine Watchdogtimer und die Leitung 19 den Mikrokontroller 12 in ein Reset und sperrt gleichzeitig über die Leitungen 16 und 17 die Endstufen, so dass keine ungesteuerte Auslösung der Zündelemente 15 durch den Mikrokontrolle 12 erfolgen kann. Ein erster Watchdogtimer muss dabei alle hundert Millisekunden angesteuert werden, dieser ist für die sogenannte Hintergrundebene des Betriebssystems gedacht, während für die Echtzeitebene des Betriebssystems ein Watchdogtimer im Sensor 10 jede Millisekunde angesteuert werden muss. Darüber hinaus beginnt beim Einschalten über den Schalter 18 der Sensor 10 einen Selbsttest. In Abhängigkeit von diesem Selbsttest werden auch die Endstufen in der Zündkreiselektronik 14 über die Leitung 16 und 17 freigegeben.

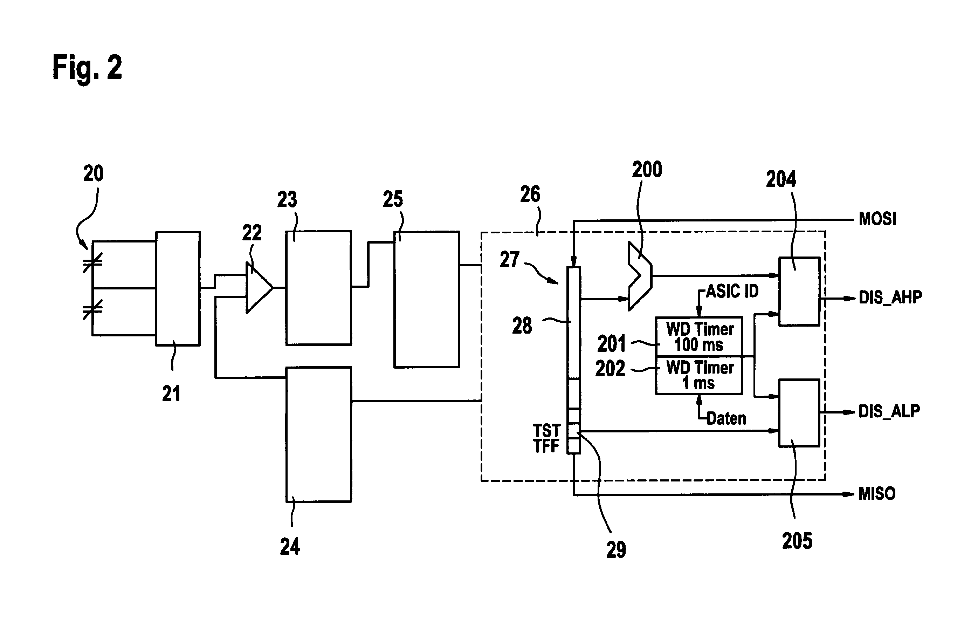

In Figur 2 ist der Aufbau des erfindungsgemäßen Beschleunigungssensors dargestellt. Die mikromechanischen Sensorelemente 20 führen zu einer kapazitiven Messung von auftretenden Beschleunigungen. D.h. in Abhängigkeit von einer auftretenden Beschleunigung verändert sich die Kapazität der mikromechanischen Elemente 20. Diese Kapazitätsänderung wird von einem CU-Konverter 21 in eine analoge Spannung umgesetzt. Nach einem Verstärker 22 wird das Signal auf einen Tiefpassfilter 23 gegeben, dessen Ausgangssignal einem Analog-Digital-Wandler 25 zugeführt wird. Das digitalisierte Signal wird dann dem Logikteil 26 zur weiteren Verarbeitung zugeführt. Zur Kompensation eines Offsets, der nach einem Einschalten des Sensors automatisch gemessen wird, ist ein Digital-Analog-Wandler 24 vorhanden, der digital vom Logikteil 26 gespeist wird und eine entsprechende Ausgangsspannung ausgibt, die in den Komparator 22 gegeben wird. Damit wird dann der Offset vom Mess-Signal eliminiert.

Im Logikteil 26 sind ein Befehlsdecoder und die Ablaufsteuerung enthalten. Die Kommunikation mit dem Mikrokontroller 12 erfolgt über die SPI-Schnittstelle mit 16 Bit Breite. Das Datenformat ist festgelegt und unterteilt sich wie folgt auf:
- 10 Bit Sensordaten
- 3 Bit Sensorkennung
- 1 Bit zur Anzeige, dass der Baustein noch nicht den Befehl "End of Programming" erhalten hat,
- 1 Bit zur Anzeige des Sensortests, das mit TST bezeichnet wird und
- 1 Bit, das mit TFF bezeichnet wird, zur Anzeige des SPI-Status.

Der Rahmen 27 zeigt diese Daten, wobei die Sensordaten mit 28 bezeichnet sind und das TST-Bit mit 29. Die Sensordaten 27 werden im Logikteil 26 einem Komparator 200 zugeführt. Im Komparator 200 werden sie mit einem vorgegebenen Schwellwert verglichen, hier mit einem Wert von 2,8 G, um festzustellen, ob die Sensordaten gültig sind. Ob das so ist, wird dann dem Baustein 204 zugeführt. Dieser Baustein 204 enthält ein Monoflop, das beim Überschreiten der Sensordaten der Schwelle für eine bestimmte Zeit auf Freigabe, und damit die Leitung DIS_AHP setzt. Diese Zeit kann beispielsweise 32 Millisekunden sein. Die Freigabezeiten können durch Senden eines SPI-Befehls verlängert werden. Das Sensortestbit 29 ist an ein weiteres Monoflop 205 angeschlossen, das die Leitung DIS_ALP mit einem Signal belegt. Während des Sensortests geht die Leitung DIS_ALP auf Sperren, während die Leitung DIS_AHP durch die Sensortestdaten auf Freigabe steht. Durch diese Strategie können Plus- und Minus-Endstufe unabhängig voneinander getestet werden. Die Sensortestdaten werden vom Mikrokontroller 12 zum Sensor 10 übertragen, während die Messdaten über die Leitung MISO zum Mikrokontroller 12 übertragen werden. Im Logikteil 26 sind auch die Watchdogtimer 201 und 202 vorgesehen. Der Watchdogtimer 201 wird mit dem Befehl Read ASIC ID alle 100 Millisekunden im Normalfall durch den Mikrokontroller12 getriggert, während der Watchdogtimer 202 durch den Befehl Read Data jede Millisekunde getriggert wird.

Tritt ein Watchdogfehler bei einem der beiden Timer 201 bzw. 202 auf, wird eine Statusleitung gesetzt, die sowohl die Leitung DIS_AHP, als auch die Leitung DIS_ALP auf Sperren setzt. Dies ist auch der Zustand nach jedem Power-On-Reset. Werden beide Watchdogtimer korrekt bedient, wird die interne Statusleitung zurückgesetzt. Die Monoflops besitzen beispielsweise für eine Zeit von 1 Sekunde das Freigabesignal auf den Leitungen, danach fallen sie in den Normalzustand zurück und das ist für die Leitung DIS_AHP Sperren und für die Leitung DIS_ALP Freigabe.

## Patentansprüche

1. Steuergerät zur Ansteuerung von Personenschutzmitteln mit einem Beschleunigungssensor (10) zur. Erzeugung eines eine Beschleunigung kennzeichnenden Signals mit einem Logikteil (26) zur Übertragung des Signals an einen Mikrokontroller(12) im Steuergerät, wobei der Mikrokontroller so konfiguriert ist, dass er anhand des Signals einen Auslösealgorithmus rechnet, wobei der Logikteil (26) zur Ü-berprüfung des Signals so konfiguriert ist dass der Logikteil (26) direkt mit Endstufen (14), die im Steuergerät angeordnet sind, verbunden ist, dass die Endstufen (14) in Abhängigkeit von der Überprüfung freigegeben werden, **dadurch gekennzeichnet, dass** der Logikteil (26) im Beschleunigungssensor (10) integriert ist.

2. Steuergerät nach Anspruch 1, **dadurch gekennzeichnet, dass** der Logikteil (26) das Signal mittels wenigstens einem festen Schwellwert auf seine Gültigkeit überprüft.

3. Steuergerät nach Anspruch 1 oder 2, **dadurch gekennzeichnet, dass** der Logikteil (26) mit einer ersten Leitung (16) mit wenigstens einer Plusendstufe und mit einer zweiten Leitung (17) mit wenigstens einer Minusendstufe zur unabhängigen Freigabe der Endstufen (14) verbunden ist.

4. Steuergerät nach einem der vorherigen Ansprüche, **dadurch gekennzeichnet, dass** der Logikteil (26) derart konfiguriert ist, dass der Logikteil (26) die Endstufen (14) in Abhängigkeit von der Überprüfung für eine vorgegebene Zeit freigibt.

5. Steuergerät nach einem der vorherigen Ansprüche, **dadurch gekennzeichnet, dass** der Beschleunigungssensor (10) derart konfiguriert ist, dass der Beschleunigungssensor (10) in Abhängigkeit von einem Selbsttest die Endstufen freigibt.

6. Steuergerät nach einem der vorherigen Ansprüche, **dadurch gekennzeichnet, dass** der Logikteil (26) zusätzlich zum Testen des Prozessors (12) konfiguriert ist.

7. Steuergerät nach Anspruch 6, **dadurch gekennzeichnet, dass** der Logikteil (26) zum Testen wenigstens zwei Watchdogs (201, 202) aufweist.

8. Steuergerät nach Anspruch 7, **dadurch gekennzeichnet, dass** ein erster Watchdog (202) zum Test einer Echtzeitebene des Betriebssystem des Prozessors (12) und ein weiterer Watchdog (201) zum Testen einer Hintergrundebene vorgesehen sind.

9. Steuergerät nach Anspruch 8, **dadurch gekennzeichnet, dass** der erste und zweite Watchdog jeweils einen Timer aufweisen.

10. Steuergerät nach einem der vorherigen Ansprüche, **dadurch gekennzeichnet, dass** der Logikteil (26) in einem Gehäuse des Beschleunigungssensors (10) angeordnet ist.

## Claims

1. Controller for driving vehicle occupant protection means, said controller having an acceleration sensor (10) which is intended to generate a signal that characterizes an acceleration and has a logic section (26) for transmitting the signal to a microcontroller (12) in the controller, the microcontroller being configured in such a manner that it uses the signal to calculate a triggering algorithm, the logic section (26) for checking the signal being configured in such a manner that the logic section (26) is directly connected to output stages (14) which are arranged in the controller, and the output stages (14) are enabled on the basis of the check, **characterized in that** the logic section (26) is integrated in the acceleration sensor (10).

2. Controller according to Claim 1, **characterized in that** the logic section (26) checks the validity of the signal using at least one fixed threshold value.

3. Controller according to Claim 1 or 2,
**characterized in that** the logic section (26) is connected to at least one positive output stage using a first line (16) and is connected to at least one negative output stage using a second line (17) in order to independently enable the output stages (14).

4. Controller according to one of the preceding claims, **characterized in that** the logic section (26) is configured in such a manner that the logic section (26) enables the output stages (14) for a predefined amount of time on the basis of the check.

5. Controller according to one of the preceding claims, **characterized in that** the acceleration sensor (10) is configured in such a manner that the acceleration sensor (10) enables the output stages on the basis of a self-test.

6. Controller according to one of the preceding claims, **characterized in that** the logic section (26) is additionally configured to test the processor (12).

7. Controller according to Claim 6, **characterized in that** the logic section (26) has at least two watchdogs (201, 202) for the purpose of testing.

8. Controller according to Claim 7, **characterized in that** a first watchdog (202) is provided for testing a real-time level of the operating system of the processor (12) and a further watchdog (201) is provided for testing a background level.

9. Controller according to Claim 8, **characterized in that** the first and second watchdogs each have a timer.

10. Controller according to one of the preceding claims, **characterized in that** the logic section (26) is arranged in a housing of the acceleration sensor (10).

## Revendications

1. Appareil de commande des moyens de protection des personnes comportant un capteur d'accélération (10) pour générer un signal caractérisant une accélération, ayant une partie logique (26) pour transmettre le signal à un microcontrôleur (12) dans l'appareil de commande,
le microcontrôleur calcule un algorithme de déclenchement à l'aide du signal,
la partie logique (26) est configurée pour contrôler le signal (50),
la partie logique (26) est reliée directement aux étages de puissance (14) de l'appareil de commande,
les étages de puissance (14) sont libérés en fonction du contrôle,
**caractérisé en ce que**
la partie logique (26) est intégrée dans le capteur d'accélération (10).

2. Appareil de commande selon la revendication 1,
**caractérisé en ce que**
la partie logique (26) vérifie le signal à l'aide d'au moins un seuil fixe pour en déterminer la validité.

3. Appareil de commande selon la revendication 1 ou 2,
**caractérisé en ce que**
la partie logique (26) est reliée par une première ligne (16) à au moins un étage de puissance (plus) et par une seconde ligne (17) à au moins un étage de puissance (moins) pour libérer indépendamment les étages de puissance (14).

4. Appareil de commande selon l'une des revendications précédentes,
**caractérisé en ce que**
la partie logique (26) est configurée pour libérer les étages de puissance (14) pendant une durée prédéfinie en fonction de la vérification.

5. Appareil de commande selon l'une des revendications précédentes,
**caractérisé en ce que**
le capteur d'accélération (10) est configuré pour libérer les étages de puissance en fonction d'un autotest.

6. Appareil de commande selon l'une des revendications précédentes,
**caractérisé en ce que**
la partie logique (26) est configurée en outre pour tester le processeur (12).

7. Appareil de commande selon la revendication 6,
**caractérisé en ce que**
la partie logique (26) comporte au moins deux chiens de garde (201, 202) pour les tests.

8. Appareil de commande selon la revendication 7,
**caractérisé en ce que**'
un premier chien de garde (202) est prévu pour tester en temps réel le système de fonctionnement du processeur (12) et un autre chien de garde (201) est prévu pour tester l'arrière-plan.

9. Appareil de commande selon la revendication 8,
**caractérisé en ce que**
le premier et le second chien de garde ont chacun une horloge.

10. Appareil de commande selon l'une des revendications précédentes,
**caractérisé en ce que**
la partie logique (26) est installée dans un boîtier du capteur d'accélération (10).
